# EUROPÄISCHE PATENTANMELDUNG

(11) **EP 4 700 920 A1**
(43) Veröffentlichungstag der Anmeldung: **25.02.2026**
(21) Anmeldenummer: 25188205.6
(22) Anmeldetag: 08.07.2025
(51) Int. Cl.: H01M 50/10, H01M 50/30, H01M 50/367, H01M 50/116

(54) **BATTERIEHÜLLE, BATTERIEZELLE UND BATTERIEANORDNUNG**

(30) Priorität: 24.07.2024 DE 102024206942
(71) Anmelder: PowerCo SE, 38239 Salzgitter (DE)
(72) Erfinder: KRAAS, Sebastian, 38302 Wolfenbüttel (DE); YU, Zhihang, 38268 Lengede (DE)
(74) Vertreter: FDST Patentanwälte

(57) **Zusammenfassung**

Die vorgestellte Erfindung betrifft eine Batteriehülle (100) für eine Batteriezelle (200), wobei die Batteriehülle (100) umfasst:
- einen Grundkörper (101), der eine Kammer (107) zur Aufnahme von galvanischen Komponenten zumindest bereichsweise umgibt,
- eine Anzahl Ventilationsöffnungen (103), die die Kammer (107) mit einer Umgebung des Grundkörpers (101) verbinden, und
- eine Anzahl Ventilationsleitungen (105), die sich an einer der Kammer (107) zugewandten Innenseite des Grundkörpers (101) erstrecken und mit zumindest einem Teil der Anzahl Ventilationsöffnungen (103) fluidleitend gekoppelt sind,
wobei die Anzahl Ventilationsleitungen (105) in einem den Grundkörper (101) bildenden Material verlaufen. Ferner betrifft die Erfindung eine Batteriezelle mit einer derartigen Batteriehülle sowie eine Batterieanordnung.

## Beschreibung

Die vorgestellte Erfindung betrifft eine Batteriehülle, eine Batteriezelle und eine Batterieanordnung gemäß den beigefügten Ansprüchen.

Batterieanordnungen umfassen in der Regel mehrere Batteriezellen, die jeweils eine Batteriehülle umfassen, die mit Batteriekomponenten, wie bspw. einem Elektrolyten und Elektroden befüllt ist.

Bei extremer thermischer Belastung, bspw. in einem Versuchsaufbau zum Testen einer thermischen Stabilität einer Batterieanordnung, kann es zu Situationen kommen, in denen im Inneren einer jeweiligen Batteriezelle gebildete Gase in eine Umgebung abgeleitet werden müssen, um ein Explodieren der Batteriezelle zu verhindern.

Zum Ableiten von Gasen aus einer Batteriezelle in eine Umgebung sind Ventilationsöffnungen bekannt, die in die Batteriehülle eingebracht sind. Durch lokale Druckmaxima kann es jedoch bei extremer thermischer Belastung zu einer Beschädigung der Batteriehülle kommen.

DE 10 2023 115 240 A1 beschreibt eine Entgasungseinheit für ein Elektronikgehäuse.

DE 10 2022 107 931 A1 beschreibt eine Batterieanordnung mit Batteriezellen, die jeweils eine Ventilationsöffnung und einen die Ventilationsöffnung überlagernden Entgasungskanal umfassen.

WO 2021/204474 A1 beschreibt eine Batterie für ein Kraftfahrzeug, die einen Zellverbund mit einer Vielzahl Batteriezellen umfasst. Die Batteriezellen sind in einem Batteriegehäuse angeordnet, das ein Entgasungselement und einen Aufnahmeraum zum Aufnehmen von aus jeweiligen Batteriezellen austretendem Gas aufweist.

Vor diesem Hintergrund ist es eine Aufgabe der vorgestellten Erfindung, eine auch bei extremer thermischer Belastung mechanisch stabile Batteriehülle bereitzustellen.

Im Rahmen der vorgestellten Erfindung werden zur Lösung der Aufgabe eine Batteriehülle, eine Batteriezelle und eine Batterieanordnung gemäß den nebengeordneten Patentansprüchen vorgestellt. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Batteriehülle beschrieben sind, selbstverständlich auch im Zusammenhang mit der erfindungsgemäßen Batteriezelle bzw. der erfindungsgemäßen Batterieanordnung und jeweils umgekehrt, sodass bezüglich der Offenbarung zu den einzelnen Erfindungsaspekten stets wechselseitig Bezug genommen wird bzw. werden kann.

Es wird somit gemäß einem ersten Aspekt der vorgestellten Erfindung eine Batteriehülle für eine Batteriezelle vorgestellt.

Die vorgestellte Batteriehülle umfasst einen Grundkörper, der eine Kammer zur Aufnahme von galvanischen Komponenten zumindest bereichsweise umgibt, eine Anzahl Ventilationsöffnungen, die die Kammer mit einer Umgebung des Grundkörpers verbinden und eine Anzahl Ventilationsleitungen, die sich an einer der Kammer zugewandten Innenseite des Grundkörpers erstrecken und mit zumindest einem Teil der Anzahl Ventilationsöffnungen fluidleitend gekoppelt sind, wobei die Anzahl Ventilationsleitungen in einem den Grundkörper bildenden Material verlaufen.

Die vorgestellte Batteriehülle basiert auf Ventilationsleitungen, die in ein Material eingebracht sind, das einen Grundkörper zur Aufnahme galvanischer Komponenten, wie bspw. einem Elektrolyten und Elektroden, bildet. Dies bedeutet, dass die Ventilationsleitungen nicht durch einen mehrschichtigen Aufbau gebildet werden, sondern direkt in dem den Grundkörper bildenden Material verlaufen.

Die Ventilationsleitungen sind zu einer durch den Grundkörper gebildeten bzw. von dem Grundkörper umgebenen Kammer, d. h., zu einer Elektrolytseite hin offen, insbesondere entlang ihres gesamten Verlaufs offen, sodass die Ventilationsleitungen in der Kammer entstehendes Fluid, insbesondere Gas, entlang ihres gesamten Verlaufs zu der Anzahl Ventilationsöffnungen und schließlich in eine Umgebung ableiten können.

Durch die erfindungsgemäß vorgesehene fluidleitende Kopplung der Anzahl Ventilationsleitungen mit der Anzahl Ventilationsöffnungen wird bspw. für den Fall, dass galvanische Komponenten innerhalb einer jeweiligen Batteriezelle schmelzen und Fluideinschlüsse, insbesondere Gaseinschlüsse bilden, ein Austrag von Fluid über die Ventilationsleitungen zu jeweiligen Ventilationsöffnungen weiterhin ermöglicht. Weiterhin bewirkt die Anzahl Ventilationsleitungen, dass Fluide aus der gesamten Kammer abgeleitet werden, sodass lokale Druckmaxima und dadurch bedingte Verformungen des Grundkörpers, vermieden werden.

Der Grundkörper der vorgestellten Batteriehülle kann bspw. ein Zylinder bzw. eine Röhre sein. Dabei verlaufen die Ventilationsleitungen insbesondere derart in dem den Grundkörper bildenden Material, dass das Material eine im Wesentlichen ebene Fläche bildet, in der Vertiefungen in Form der Ventilationsleitungen ausgebildet sind.

Verschiedene Ventilationsleitungen können einen gleichen Querschnitt bzw. eine gleiche Länge oder einen unterschiedlichen Querschnitt bzw. eine unterschiedliche Länge aufweisen.

Es kann vorgesehen sein, dass die Anzahl Ventilationsleitungen in das den Grundkörper bildende Material eingeformt oder eingebracht sind.

Bspw. kann vorgesehen sein, dass die Anzahl Ventilationsleitungen durch Materialabtrag und/oder Verformung des Materials in den Grundkörper eingebracht sind. Dazu können die Ventilationsleitungen bspw. eingefräst, eingestanzt, eingepresst, eingeprägt und/oder eingebrannt, insbesondere eingelasert sein.

Die Ventilationsleitungen können in einem einer Formgebung des Grundkörpers nachgelagerten Prozess in den Grundkörper eingebracht werden oder während einer Formgebung des Grundkörpers initial mit in diesem ausgestaltet werden, bspw. während eines Gieß- oder Stanzprozesses.

Es kann weiterhin vorgesehen sein, dass jeweilige Ventilationsleitungen sich zumindest bis zu einem Ende der Batteriehülle erstrecken.

Durch Ventilationsleitungen, die sich zumindest bis zu einem Ende der Batteriehülle erstrecken, wird erreicht, dass insbesondere sich am Boden anreicherndes Fluid zu einer jeweiligen Ventilationsöffnung abgeleitet werden kann..

Es kann weiterhin vorgesehen sein, dass die Anzahl Ventilationsleitungen an einer Längsseite der Batteriehülle ausgebildet ist.

Entlang der Längsseite ausgebildete Ventilationsleitungen, insbesondere in Kombination mit entlang der Längsseite ausgebildeten Ventilationsöffnungen, haben sich als besonders geeignet zum Verhindern einer Explosion einer Batteriezelle bei extremer thermischer Belastung erwiesen.

Es kann weiterhin vorgesehen sein, dass die Batteriehülle eine Vielzahl Ventilationsleitungen umfasst, wobei zumindest ein Teil der Ventilationsleitungen parallel zu einer Längsachse der Batteriehülle verläuft.

Parallel zu einer Längsachse, insbesondere einer Symmetrieachse der Batteriehülle verlaufende Ventilationsleitungen bedingen eine schnelle Ableitung von Fluiden zu jeweiligen Ventilationsöffnungen, wodurch lokale Druckmaxima vermieden werden.

Es kann weiterhin vorgesehen sein, dass die Batteriehülle eine Vielzahl Ventilationsleitungen umfasst, wobei zumindest ein Teil der Ventilationsleitungen in einem Winkel zwischen 1° und 89° zu einer Längsachse der Batteriehülle verläuft, wobei sich die Winkel zwischen verschiedenen Ventilationsleitungen unterscheiden.

In verschiedenen Winkeln zu einer jeweiligen Längsachse der Batteriehülle ausgebildete Ventilationsleitungen ermöglichen ein breit gestreutes Ableiten einer großen Gasmenge zu jeweiligen Ventilationsöffnungen, sodass zufällig in der Kammer entstehendes Fluid stets Zugang zu einer Ventilationsleitung findet.

Dabei kann vorgesehen sein, dass die Winkel der Ventilationsleitungen, d. h., die Größe der Winkel, in Richtung von der Längsachse weg zunehmen.

Winkel der Ventilationsleitungen, die in Richtung von der Längsachse weg zunehmen, können bspw. in einem sternförmigen Muster ausgebildet sein.

Es kann bspw. vorgesehen sein, dass die Anzahl Ventilationsleitungen runde, dreieckige, viereckige oder vieleckige Ventilationsleitungen umfasst.

Insbesondere runde bzw. ovale Ventilationsleitungen haben sich als besonders geeignet zum Ableiten von großen Gasmengen erwiesen.

Es kann weiterhin vorgesehen sein, dass die Batteriehülle aus mindestens einem Material der folgenden Liste an Materialien geformt ist: Stahl, Aluminium, metallische Legierung, Polymermaterial, Kompositmaterial.

Gemäß einem zweiten Aspekt betrifft die vorgestellte Erfindung eine Batteriezelle zum Bereitstellen von elektrischer Energie, wobei die Batteriezelle eine mögliche Ausgestaltung der vorgestellten Batteriehülle und in der Batteriehülle angeordnete galvanische Komponenten umfasst.

Aufgrund der vorgestellten Batteriehülle ist die vorgestellte Batteriezelle besonders robust gegenüber extremer thermische Belastung.

Gemäß einem dritten Aspekt betrifft die vorgestellte Erfindung eine Batterieanordnung zum Bereitstellen von elektrischer Energie, wobei die Batterieanordnung eine Vielzahl möglicher Ausgestaltungen der vorgestellten Batteriezelle umfasst.

Aufgrund der vorgestellten Batteriehülle bzw. Batteriezelle ist die vorgestellte Batterieanordnung besonders robust gegenüber extremer thermische Belastung. Insbesondere wird durch die vorgestellte Batteriehülle bzw. Batteriezelle eine Wahrscheinlichkeit für eine Explosion der Batteriezelle und eine dadurch bedingte Kettenreaktion aufgrund einer in der Batterieanordnung explodierenden Batteriezelle sowie eine mechanische und thermische Belastung weiterer Batteriezellen der Batterieanordnung bei einer extremen thermischen Belastung einer einzelnen Batteriezelle der Batterieanordnung minimiert. Eine solche extreme thermische Belastung kann bspw. ein sogenanntes "thermal runaway", insbesondere während eines Tests zum Testen eines Verhaltens einer Batterieanordnung bei einem "thermal runaway" einzelner Batteriezellen, sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen jeweils schematisch:
- Figur 1: eine erste mögliche Ausgestaltung der vorgestellten Batteriehülle,
- Figur 2: eine zweite mögliche Ausgestaltung der vorgestellten Batteriehülle,
- Figur 3: eine dritte mögliche Ausgestaltung der vorgestellten Batteriehülle,
- Figur 4: eine vierte mögliche Ausgestaltung der vorgestellten Batteriehülle,
- Figur 5: einen Querschnitt durch eine mögliche Ausgestaltung der vorgestellten Batteriehülle und
- Figur 6: eine mögliche Ausgestaltung der vorgestellten Batterieanordnung mit einer Vielzahl möglicher Ausgestaltungen der vorgestellten Batteriezelle.

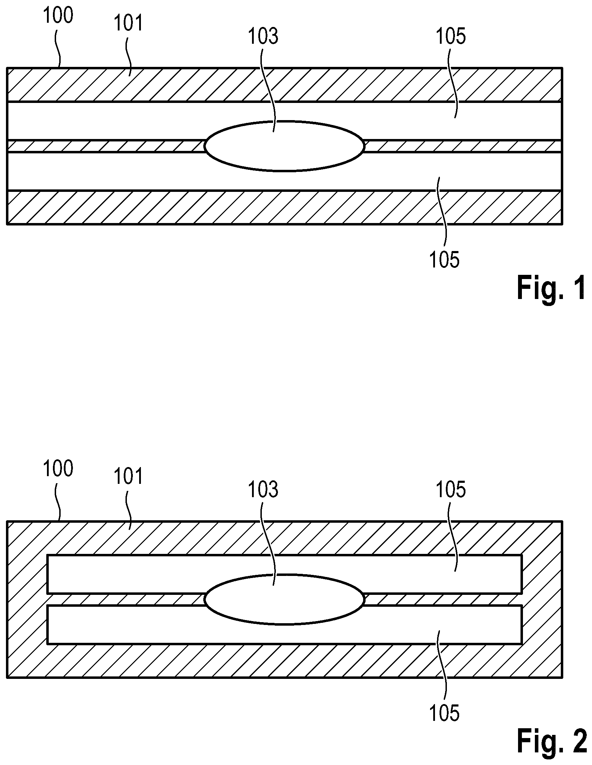

In Fig. 1 ist eine Batteriehülle 100 für eine Batteriezelle dargestellt.

Die Batteriehülle 100 umfasst einen Grundkörper 101, der eine Kammer zur Aufnahme von galvanischen Komponenten zumindest bereichsweise umgibt, eine Ventilationsöffnung 103, die die Kammer mit einer Umgebung des Grundkörpers 101 verbindet und Ventilationsleitungen 105, die sich an einer der Kammer zugewandten Innenseite des Grundkörpers 101 erstrecken und mit der Ventilationsöffnung 103 fluidleitend gekoppelt sind. Dabei verlaufen die Ventilationsleitungen 105 in einem den Grundkörper 101 bildenden Material bzw. sind in das Material des Grundkörpers 101 eingebracht, sodass die Ventilationsöffnung 103 in ihrem Randbereich in die Ventilationsleitungen 105 mündet bzw. übergeht.

In Fig. 1 erstrecken sich die Ventilationsleitungen 105 über eine gesamte Länge des Grundkörpers 101, sodass in der Kammer freiwerdendes Gas entlang einer gesamten Länge der Batteriehülle 100 zu der Ventilationsöffnung 103 abgeführt wird.

In Fig. 2 sind die Ventilationsleitungen kleiner als in Fig. 1 ausgebildet, sodass Randbereiche der Batteriehülle 100, an denen in der Regel Komponenten angeordnet sind, durch die keine Gase entstehen, nicht durch die Ventilationsleitungen kontaktiert sind.

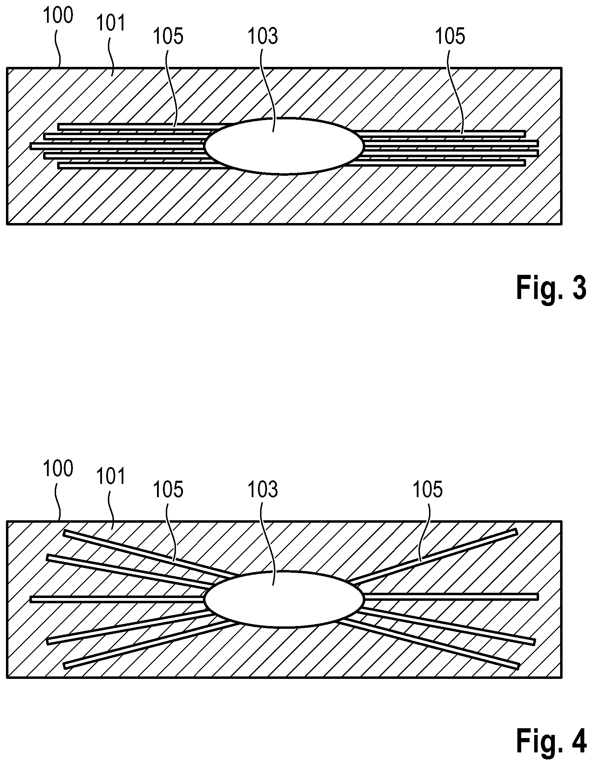

In Fig. 3 sind die Ventilationsleitungen 105 schmäler als in Fig. 1 und Fig. 2, jedoch zahlreicher, sodass ein besonders großer Bereich für ein Ableiten von Fluid durch die Ventilationsleitungen 105 abgedeckt wird.

In Fig. 4 sind die Ventilationsleitungen 105 sternförmig verteilt in einem sich ändernden Winkel zu einer Längsachse der Batteriehülle 100 angeordnet, sodass ebenfalls ein besonders großer Bereich für ein Ableiten von Fluid durch die Ventilationsleitungen 105 abgedeckt wird.

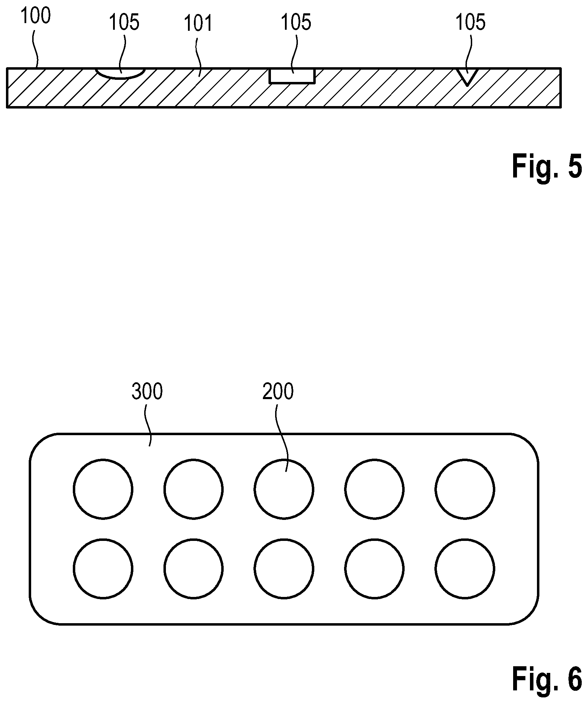

In Fig. 5 ist ein Querschnitt durch eine mögliche Ausgestaltung der vorgestellten Batteriehülle 110 mit einer Kammer 107 dargestellt. Hier sind verschiedene Querschnitte bzw. Formen der Ventilationsleitungen 105 erkennbar, nämlich eine runde Form, eine viereckige bzw. quaderförmige und eine dreieckige Form. Weiterhin ist gut erkennbar, dass die Ventilationsleitungen 105 eben mit einer Oberfläche des Grundkörpers 101 verlaufen bzw. in den Grundkörper 101 eingebracht sind.

In Fig. 6 ist eine Batterieanordnung 300 dargestellt, die eine Vielzahl Batteriezellen 200 umfasst, die jeweils durch Batteriehüllen 100 gemäß der Fig. 1 - 5 gebildet sind.

### Bezugszeichenliste

- 100: Batteriehülle
- 101: Grundkörper
- 103: Ventilationsöffnung
- 105: Ventilationsleitung
- 107: Kammer
- 200: Batteriezelle
- 300: Batterieanordnung

## Patentansprüche

1. Batteriehülle (100) für eine Batteriezelle (200),
wobei die Batteriehülle (100) umfasst:
- einen Grundkörper (101), der eine Kammer (107) zur Aufnahme von galvanischen Komponenten zumindest bereichsweise umgibt,
- eine Anzahl Ventilationsöffnungen (103), die die Kammer (107) mit einer Umgebung des Grundkörpers (101) verbinden, und
- eine Anzahl Ventilationsleitungen (105), die sich an einer der Kammer (107) zugewandten Innenseite des Grundkörpers (101) erstrecken und mit zumindest einem Teil der Anzahl Ventilationsöffnungen (103) fluidleitend gekoppelt sind,
wobei die Anzahl Ventilationsleitungen (105) in einem den Grundkörper (101) bildenden Material verlaufen.

2. Batteriehülle (100) nach Anspruch 1,
**dadurch gekennzeichnet,**
**dass** die Anzahl Ventilationsleitungen (105) in das den Grundkörper (101) bildende Material eingeformt oder eingebracht sind.

3. Batteriehülle (100) nach Anspruch 1 oder 2,
**dadurch gekennzeichnet,**
**dass** jeweilige Ventilationsleitungen (105) sich bis zu einem Ende der Batteriehülle (100) erstrecken.

4. Batteriehülle (100) nach einem der voranstehenden Ansprüche,
**dadurch gekennzeichnet,**
**dass** die Anzahl Ventilationsleitungen (105) an einer Längsseite der Batteriehülle (100) ausgebildet ist.

5. Batteriehülle (100) nach einem der voranstehenden Ansprüche,
**dadurch gekennzeichnet,**
**dass** die Batteriehülle (100) eine Vielzahl Ventilationsleitungen (105) umfasst, wobei zumindest ein Teil der Ventilationsleitungen (105) parallel zu einer Längsachse der Batteriehülle (100) verläuft.

6. Batteriehülle (100) nach einem der voranstehenden Ansprüche,
**dadurch gekennzeichnet,**
**dass** die Batteriehülle (100) eine Vielzahl Ventilationsleitungen (105) umfasst, wobei zumindest ein Teil der Ventilationsleitungen (105) in einem Winkel zwischen 1° und 89° zu einer Längsachse der Batteriehülle (100) verläuft, wobei sich die Winkel zwischen verschiedenen Ventilationsleitungen (105) unterscheiden.

7. Batteriehülle (100) nach Anspruch 6,
**dadurch gekennzeichnet,**
**dass** die Winkel der Ventilationsleitungen (105) in Richtung von der Längsachse weg zunehmen.

8. Batteriehülle (100) nach einem der voranstehenden Ansprüche,
**dadurch gekennzeichnet,**
**dass** die Anzahl Ventilationsleitungen (105) runde, dreieckige, viereckige oder vieleckige Ventilationsleitungen (105) umfasst.

9. Batteriehülle (100) nach einem der voranstehenden Ansprüche,
**dadurch gekennzeichnet,**
**dass** die Batteriehülle (100) aus mindestens einem Material der folgenden Liste an Materialien geformt ist: Stahl, Aluminium, metallische Legierung, Polymermaterial, Kompositmaterial.

10. Batteriezelle (200) zum Bereitstellen von elektrischer Energie,
wobei die Batteriezelle (200) eine Batteriehülle (100) nach einem der Ansprüche 1 bis 9 und in der Batteriehülle (100) angeordnete galvanische Komponenten umfasst.

11. Batterieanordnung (300) zum Bereitstellen von elektrischer Energie,
wobei die Batterieanordnung (300) eine Vielzahl Batteriezellen (200) nach Anspruch 10 umfasst.
